# EUROPEAN PATENT APPLICATION

(11) **EP 2 511 481 A2**
(43) Date of publication of application: **17.10.2012**
(21) Application number: 12163446.3
(22) Date of filing: 05.04.2012
(51) Int. Cl.: F01D 11/00

(54) **Flexible seal for turbine engine and corresponding arrangement**

(30) Priority: 14.04.2011 US 201113087253
(71) Applicant: General Electric Company, Schenectady, NY 12345 (US)
(72) Inventor: Shukla, Prashant, 560066 Bangalore, Karnataka (IN); Walunj, Jalindar Appa, 560066 Bangalore, Karnataka (IN); Honkomp, Mark, Greenville, SC South Carolina 29615 (US)
(74) Representative: Cleary, Fidelma

(57) **Abstract**

A turbine includes a turbine seal. The turbine seal includes a first straight portion extending along a first axis. The turbine seal also includes a second straight portion extending along the first axis. The first and second straight portions of the turbine seal intersect to form a V-shaped cross section with an opening extending along the first axis. The first and second straight portions of the turbine seal are also configured to resiliantly move towards and away from each other and the first and second straight portions of the turbine seal are configured to pre-load the turbine seal along a gap between first and second bucket segments of the turbine.

## Description

### BACKGROUND OF THE INVENTION

The subject matter disclosed herein relates to a flexible seal for use in turbomachinery, such as a turbine engine.

A gas turbine engine combusts a mixture of fuel and air to generate hot combustion gases, which in turn drive one or more turbines. In particular, the hot combustion gases force turbine bucket segments to rotate, thereby driving a shaft to rotate one or more loads, e.g., electrical generator. These turbine bucket segments may include shanks that allow for adjacent placement in a turbine stage of the gas turbine engine. At the same time, highly compressed air is often extracted from a compressor for utilization in pressurizing a cavity formed between two adjacent bucket shanks. This positive pressure difference may aid in preventing hot combustion gases from entering into the shank cavity, thus avoiding increases in thermal stresses that adversely affect bucket life. However, as these bucket segments and their shanks may be individually produced and then combined into a single turbine stage, gaps may be present between the individual turbine bucket shanks. These gaps may provide a leakage path for the pressurized shank cavity air, thus reducing overall turbine efficiency and output. Accordingly, it is desirable to minimize the leakage of this pressurizing gas through gaps located between turbine bucket shanks in a turbine stage of a gas turbine engine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a turbine seal including a first straight portion extending along a first axis and a second straight portion extending along the first axis, wherein the first and second straight portions intersect to form a V-shaped cross section with an opening extending along the first axis, wherein the first and second straight portions are configured to resiliantly move towards and away from each other, wherein the first and second straight portions are configured to pre-load the turbine seal along a gap between first and second bucket segments of a turbine

In a second aspect, the invention resides in a system including a first turbine segment comprising a first blade coupled to a first shank, a second turbine segment comprising a second blade coupled to a second shank, and the turbine seal as described above wherein the turbine seal is configured to maintain contact with the first and second turbine segments as a width of the opening of the seal varies.

### BRIEF DESCRIPTION OF THE DRAWINGS

Embodiments of the present invention will now be described, by way of example only, with reference to the accompanying drawings in which:
FIG. 1 is a schematic flow diagram of an embodiment of a gas turbine engine having turbine bucket platforms with seals;
FIG. 2 is a side view of an embodiment of two turbine bucket segments of the gas turbine engine of FIG. 1 taken along line 2-2;
FIG. 3 is a partial cross-sectional view of two turbine bucket segments of FIG. 2 taken along line 3-3;
FIG. 4 is perspective side view of an embodiment of a flexible seal of FIG. 2;
FIG. 5 is a partial cross-sectional view of an embodiment of two turbine bucket segments of FIG. 3 taken within line 5-5, illustrating an embodiment of the flexible seal;
FIG. 6 is a partial cross-sectional view of an embodiment of two turbine bucket segments of FIG. 3 taken within line 5-5, illustrating an embodiment of the flexible seal; and
FIG. 7 is a partial cross-sectional view of an embodiment of two turbine bucket segments of FIG. 3 taken within line 5-5, illustrating an embodiment of the flexible seal.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to a system and a method for sealing a gap between adjacent segments in a turbomachine, such as turbine bucket shanks in a turbine stage of a gas turbine engine, a steam turbine engine, a hydro turbine engine, or another turbine. The system and method may include inserting a flexible seal, such as a flexible seal pin, between adjacent turbine bucket shanks. The preload value (e.g., spring force) of the flexible seal and pressure differentials between the turbine bucket shanks provides a positive seal between any two adjacent bucket shanks. For example, the preload value of the flexible seal provides a positive force by the flexible seal against the adjacent bucket shanks prior to and during operation of the turbomachine (e.g., turbine). The pressure differentials also supplement the positive force of the flexible seal against the adjacent bucket shanks, thereby increasing the effectiveness of the flexible seal. This flexible seal may be, for example, V-shaped or formed in other shapes and may maintain a positive seal despite variations in the gap between adjacent bucket shanks.

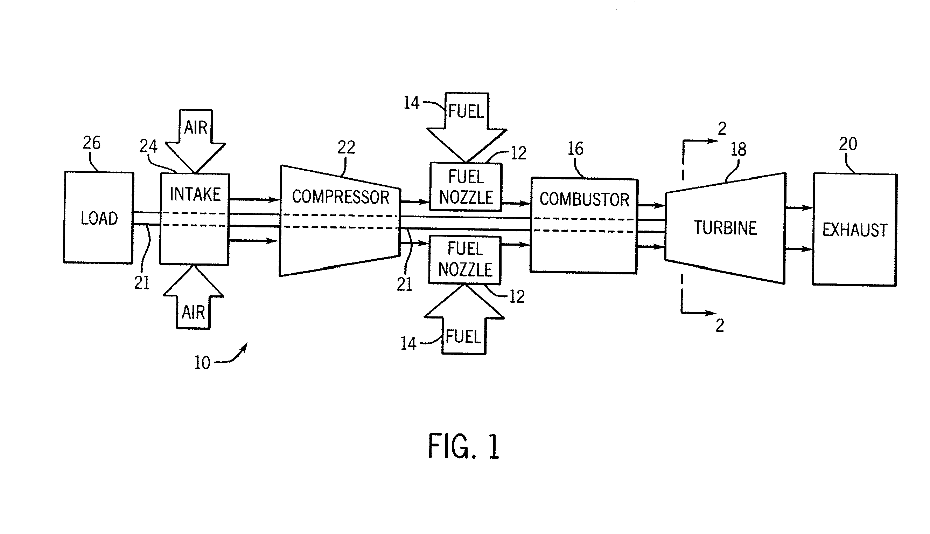

FIG. 1 is a block diagram of an exemplary turbine system including a gas turbine engine 10 that may employ turbine rotor buckets (i.e., blades). As discussed below, the buckets may include plunger seals, such as V-shaped plunger seals. In certain embodiments, the engine 10 may be utilized to power an aircraft, a watercraft, a locomotive, a power generation system, or combinations thereof. The illustrated gas turbine engine 10 includes fuel nozzles 12, which may intake a fuel supply 14 and mix the fuel with air, as well as distribute the air-fuel mixture into a combustor 16. The air-fuel mixture may combust in, for example, a chamber within combustor 16, thereby creating hot pressurized exhaust gases. The combustor 16 may direct the exhaust gases through a turbine 18 toward an exhaust outlet 20. As the exhaust gases pass through the turbine 18, the gases force turbine blades to rotate a shaft 21 along an axis of system 10. As illustrated, shaft 21 is connected to various components of the turbine engine 10, including compressor 22. Compressor 22 also includes blades coupled to shaft 21. Thus, blades within compressor 22 rotate as shaft 21 rotates, compressing air from air intake 24 through compressor 22 into fuel nozzles 12 and/or combustor 16. Shaft 21 may also be connected to load 26, which may be a vehicle or a stationary load, such as an electrical generator in a power plant or a propeller on an aircraft. Load 26 may be any suitable device that is powered by the rotational output of the turbine engine 10.

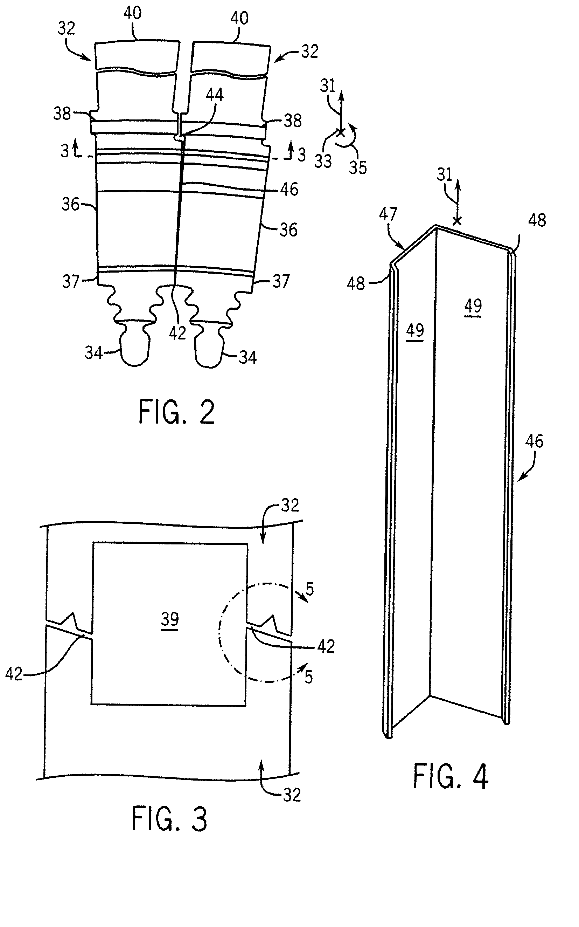

FIG. 2 illustrates a side view of an embodiment of two turbine bucket segments 32 of the turbine 18 portion of the gas turbine engine 12 taken along line 2-2 of FIG. 1, as well as a legend that illustrates the orientation of the bucket segments 32 in a radial direction 31, an axial direction 33, and a circumferential direction 35. The turbine bucket segments 32 may, for example, be coupled to the shaft 21 via rotor wheels, and may be partially disposed within the path of the hot combustion gases as part of a single stage gas turbine, a dual-stage turbine system that includes a low-pressure turbine and a high-pressure turbine, or in a multi-stage turbine system with three or more turbine stages. Alternatively, the turbine bucket segments 32 may be disposed in a steam turbine or a hydro turbine. For illustrative purposes, only two turbine bucket segments 32 are illustrated in FIG. 2; however, it should be noted that multiple turbine bucket segments 32 may be arranged, for example, to form a circular structure in the turbine 18.

The bucket segments 32 may be constructed of a metal, metal alloy, ceramic matrix composite (CMC), or other suitable material. Each bucket segment 32 includes a wheel mount 34, a shank 36, a platform 37, a platform 38, and a bucket or blade 40. When aligned as illustrated in FIG. 2, the bucket segments 32 may also form a gap 42 which may allow for gas to leak between the bucket segments (thus reducing the efficiency of the turbine engine 10) if not properly sealed. Additionally, in the illustrated embodiment, each wheel mount 34 includes a dovetail to couple the bucket segment 32 with a corresponding groove (e.g., axial 33 groove) of a rotor wheel in the turbine 18. Thus, the dovetail of the wheel mount 34 extends into the wheel and the platform 37 rests on the wheel to support the shank 36. The shank 36 extends radially 31 outward from the dovetail of the wheel mount 34 to the platform 38, which may be a ledge or base that supports the bucket or blade 40. For example, the bucket 40 may be an airfoil extending radially 31 outward from the platform 38. The buckets 40 (e.g. airfoils) are disposed within the path of the hot combustion gases. In operation, the hot combustion gases exert motive forces on the buckets (e.g., airfoils) 40 to drive the turbine 18.

Additionally, as discussed above, the bucket segments 32 may form a gap 42. This gap 42 may extend radially 31 along the shank 36 from the dovetail of the wheel mount 34 to radially 31 beneath a damper opening 44, which may be located between the adjacent shanks 36 and radially 31 below the airfoil 40 of each of the bucket segments 32. This gap 42 may allow for leakage of hot combustion from an upstream side to a downstream side of the bucket segments 32. Unfortunately, this leakage may reduce the overall efficiency of the turbine engine 10 during use. Accordingly, it may be desirable to block this leakage from occurring through the use of, for example, one or more flexible seals 46 in the gap 42.

FIG. 3 illustrates a partial cross-sectional view of the bucket segments 32 taken along line 3-3 of FIG. 2. As illustrated, the bucket segments 32 are positioned in an annular arrangement circumferentially 35 adjacent one another, with a cavity 39 formed therebetween. This cavity 39 may, for example, be a pressurized cavity that receives compressed air from the compressor 22 cool the bucket segments 32 and block entry of the hot combustion gases into the shank cavity 39, thus reducing leakage between bucket segments 32 to increase work of the hot combustion gases on the buckets 40. However, in this configuration, the shape of the bucket segments 32 may cause the gap 42 (e.g., a leakage path from the cavity 39) to be present between the adjacent bucket segments 32. That is, the gap 42 also allow for leakage of the air in the pressurized shank cavity 39 between the bucket segments 32 if not properly sealed, for example, by a one or more flexible seals 46 in the gap 42. As discussed in detail below, the flexible seal 46 may provide a spring-force or pre-load between the one or more seals 46 and the segments 32 to ensure a positive seal despite variations in the gap 42.

FIG. 4 illustrates a perspective side view of an embodiment of flexible seal 46 (e.g. a V-type seal) that may be utilized for sealing the gap 42 between bucket segments 32. The flexible seal 46 may, for example, include an elongated structure having a V-shaped cross-section 47 as well as support legs 48 to define the shape of the flexible seal 46, wherein the V-shaped cross-section 47 and the support legs 48 extend along a radial axis 31 of the flexible seal 46. This flexible seal 46 may be a flexible seal pin characterized as a V-type seal, which includes two straight portions 49 (e.g., flat surfaces) that combine to form a V-shape for the flexible seal 46. In other words, the flexible seal 46 may be defined as an elongated seal with a V-shaped cross-section 47 along its length. For example, the flexible seal 46 may be an extended V-shape with a uniform V-shaped cross-section 47 along its length. In certain embodiments, the flexible seal 46 may be extruded to form the uniform V-shaped cross-section. Moreover, the support legs 48 may extend from the uniform V-shaped cross-section along the length of the flexible seal 46. In one embodiment, the support legs 48 may be parallel to one another.

Moreover, the V-shaped cross-section 47 of the flexible seal 46 may compress when pressure is applied. Each of the straight portions 49 of the flexible seal 46 may flex when pressure is applied, such that the straight portions 49 may move closer in proximity to one another (thus moving support legs 48 closer to one another as well). For example, due to thermal expansion and/or mechanical load, the shanks 36 may move in a tangential direction, such as direction 35, reducing gap 42. The inverse may also occur when a thermal load is reduced, such that gap 42 may increase. Accordingly, with a change (e.g., reduction) in gap 42, the shank 36 or bucket 32 may apply pressure to the flexible seal 46, causing the flexible seal 46 to move into a cavity (such as a V-shaped cavity) in the bucket 32. Conversely, when gap 42 is increased, the flexible seal 46 may move from a cavity (such as a V-shaped cavity) in the bucket 32. However, regardless of the change in the gap 42, the flexible seal 46 will maintain contact with the bucket 32 adjacent the bucket 32 with the cavity therein to maintain a seal of the gap 42.

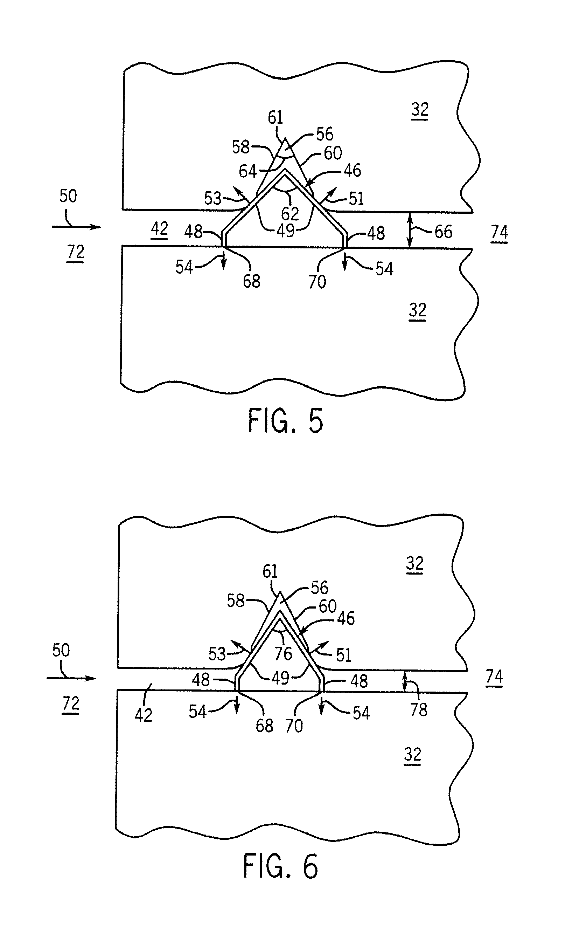

In one embodiment, the flexible seal 46 may be made from nickel, cobalt, or iron-base superalloys, or other suitable materials, with desirable mechanical properties able to withstand turbine operating temperatures and conditions (such as 310 stainless steel). Examples of usable superalloys may include Inconel® alloy 600, Inconel® alloy 625, Inconel® alloy 718, Inconel® alloy 738, Inconel® alloy X-750, or Hastalloy® X. The material chosen for the flexible seal 46 may be based on requirements for mechanical strength, creep resistance at high temperatures, corrosion resistance, or other attributes. The flexible seal 46 may be sized such that it fits into the gap 42. An illustration of the flexible seal 46 installed between two bucket segments 32 is illustrated in FIG. 5.

FIG. 5 illustrates a cross-sectional view of the bucket segments 32 taken within line 5-5 of FIG. 3, illustrating an embodiment of the flexible seal 46 (e.g. a V-type seal). FIG. 5 may represent assembly conditions (i.e., cold conditions) present for the bucket segments 32. As illustrated, the flexible seal 46 may be a flexible seal pin inserted between the bucket segments 32, such that the flexible seal 46 maintains a positive seal despite variations in the gap 42 to block leakage of gas along line 50. For example, the flexible seal 46 may provide a resiliency, a flexibility, or a spring-force, which creates a pre-load in the gap 42 between the bucket segments 32. In other words, the straight portions 49 may flex or bend toward one under upon installation in the gap 42 between the bucket segments 32, such that the straight portions 49 impart outward forces 51 and 53 toward the adjacent bucket segments 32. Additionally, support legs 48 may impart an outward force 54 toward the adjacent bucket segments 32. In this manner, the flexible seal 46 may be preloaded into position in a hollow region 56 of one of the bucket segments 32. For example, the flexible seal 46 may be loaded into a hollow region 56 of one of the bucket segments 32 that includes two flat portions 58 and 60 configured to receive the flexible seal 46. These flat portions 58 and 60 may form a V-shape 61 or a triangular shape that is sized to hold the flexible seal 46. In one embodiment, this V-shape 61 formed by flat portions 58 and 60 may be approximately, for example, 10 mils, 15 mils, 20 mils, 25 mils, 30 mils, or more in width at its widest opening. However, it should be noted that these dimensions are given as examples only and that any suitable dimensions may be applied.

As illustrated, the flexible seal 46 under assembly (i.e., cold) conditions may form an angle 62 separating straight portions 49 of the flexible seal. This angle 62 may be approximately, for example, 70 degrees, 75 degrees, 80 degrees, 85 degrees, 90 degrees, 95 degrees, 100 degrees, 105 degrees, 110 degrees, 115 degrees, or more. Moreover, the range of the angle 62 may be between about 60 degrees and about 120 degrees, between about 70 degrees and about 100 degrees, or between about 75 degrees and about 90 degrees. Furthermore, the hollow region 56 may include an angle 64 formed at a connection point of the flat portions 58 and 60. This angle 64 may be approximately, for example, 45%, 50%, 55%, 60%, 56%, 70%, or 75% of the angle 62 of the flexible seal 46.

Furthermore, as illustrated in FIG. 5, under assembly conditions the flexible seal 46 may operate to seal gap 42, which may be of a width 66 of approximately 20 mils, 25 mils, 30 mils, 40 mils, 45 mils, 50 mills, or more. That is, the flexible seal 46 may contact the bucket segment 32 adjacent to the bucket segment 32 in which cavity 56 is located. Two contact points 68 and 70 of the support legs 48 of the flexible seal 46 may abut the bucket segment 32, such that the flexible seal 46 may operate to block gas from moving along line 50 from a frontside 72 (e.g., upstream side inclusive of the cavity 39) of the bucket segments 32 and a backside 74 (e.g., downstream side) of the bucket segments 32 to prevent leakage across gap 42. That is, pressure differentials between gases present in the frontside 72 and backside 74 of the bucket segments 32 may exist such that pressure of gases present in the frontside 78 (e.g., in the cavity 39) of the bucket segments 32 may be greater than those present in the backside 80 of the bucket segments 32. However, placement of the flexible seal 46 as illustrated in FIG. 5 may allow for sealing of gap 42 to block the flow of gas along line 50. Moreover, it is envisioned that the contact points 68 and 70 may be at the tip of each of the support legs 48. Additionally, the contact points 68 and 70 may, for example, be flat, rounded, curved, or otherwise shaped. These various shapes of the contact points 68 and 70 may be selected based on such factors as ease of manufacture, frictional resistance characteristics, or based on other criteria.

FIG. 6 illustrates a cross-sectional view of the bucket segments 32 taken within line 5-5 of FIG. 3, illustrating an embodiment of the flexible seal 46 (e.g. a V-type seal) under operational conditions (i.e., hot conditions) present for the bucket segments 32. As illustrated, the flexible seal 46 under operational (i.e., hot) conditions may form an angle 76 separating straight portions 49 of the flexible seal. This angle 76 may be approximately, for example, 30 degrees, 35 degrees, 40 degrees, 45 degrees, 50 degrees, 55 degrees, 60 degrees, 65 degrees, 70 degrees, 75 degrees, or more. Moreover, the range of the angle 76 may be between about 30 degrees and about 80 degrees, between about 40 degrees and about 70 degrees, or between about 50 degrees and about 60 degrees. As illustrated, angle 76 is smaller than angle 62 previously discussed above with respect to FIG. 5. That is, angle 76 may be generated as a result of a width 78 of the gap 42 being smaller than width 66 of gap 42 in FIG. 5. This reduction in the value of the width 78 of the gap 42 may be as a result of thermal expansion of the bucket segments 32 as the temperature increases due to operation of the engine 10. This thermal expansion causes the bucket segments 32 to move closer to one another, thus reducing the width 78 of the gap 42. This thermal expansion also causes the flexible seal 46 to be pushed further into the hollow region 56, resulting in support legs 48 moving closer in proximity to one another. However, the contact points 68 and 70 of the support legs 48 remain in contact with the bucket segment 32 during the reduction in the width 78 of the gap 42 to block gas from moving along line 50 from the frontside 72 of the bucket segments 32 to the backside 74 of the bucket segments 32 (i.e., to block leakage across gap 42.) In one embodiment, the support legs 48 may move approximately, for example, approximately 10 mils, 15 mils, 20 mils, 25 mils, 30 mils, or more from their assembly condition position as the temperature surrounding the flexible seal 46 rises (e.g., due to the operation of the engine 10.) Additionally, the flexible seal 46 may return to its original cold assembly position when the engine 10 is not operating. In this manner, the flexible seal 46 may adjust its position in response to bucket segment 32 movement caused by, for example, thermal expansion, while maintaining a seal of the gap 42 present between the bucket segments 32. Additionally, as the flexible seal 46 is positionally adjusted, the contact points 68 and 70 constantly maintain contact with the bucket segment 32. That is, the contact points 68 and 70 have the same amount of contact with the bucket segment 32 regardless of whether the flexible seal 46 is exposed to assembly conditions or operational conditions.

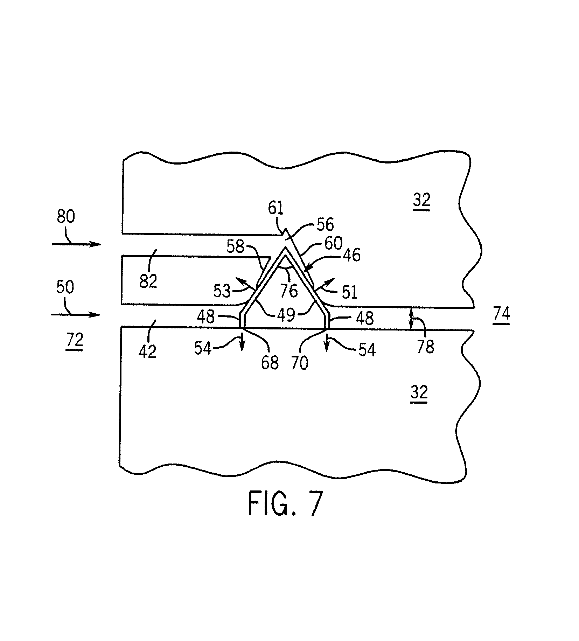

FIG. 7 illustrates a cross-sectional view of the bucket segments 32 taken within line 5-5 of FIG. 3, illustrating an embodiment of the flexible seal 46 (e.g. a V-type seal) under operational conditions (i.e., hot conditions) present for the bucket segments 32. As illustrated, the flexible seal 46 under operational (i.e., hot) conditions may form an angle 76 separating straight portions 49 of the flexible seal. Additionally, to aid in increasing outward forces 51 and 53, high pressure gas present in the frontside 72 (e.g., upstream side inclusive of the cavity 39) of the bucket segments 32 may be channeled into hollow region 56 of one of the bucket segments 32. That is, high pressure gas present in the frontside 72 (i.e., in the cavity 39) may be directed along line 80 through a channel 82 of one of the bucket segments 32. That is, the channel 82 may connect the frontside 72 with the hollow region 56 of one of the bucket segment 32. This pressurized gas may aid in imparting additional force to the flexible seal 46 (i.e., adding to outward forces 51 and 53, as well as outward force 54) to aid in the sealing of the gap 42.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A turbine seal (46), comprising:
a first straight portion (49) extending along a first axis; and
a second straight portion (49) extending along the first axis, wherein the first and second straight portions intersect to form a V-shaped cross section (47) with an opening extending along the first axis, wherein the first and second straight portions (49) are configured to resiliantly move towards and away from each other to vary the width of the opening, wherein the first and second straight portions (49) are configured to pre-load the turbine seal (46) along a gap (42) between first and second bucket segments (32) of a turbine.

2. The turbine seal of claim 1, wherein the first straight portion (49) and the second straight portion (49) intersect at a vertex to form the V-shaped cross section.

3. The turbine seal of claim 1 or 2, wherein the opening comprises an angle of between about 70 degrees and about 100 degrees.

4. The turbine seal of any of claim 1 to 3, comprising a third straight portion (48) coupled to the first straight portion (49) and disposed on a first side of the opening, wherein the third straight portion (48) extends along the first axis.

5. The turbine seal of claim 4, comprising a fourth straight portion (48) coupled to the second straight portion (49) and disposed on a second side of the opening, wherein the fourth straight portion extends along the first axis.

6. The turbine seal of claim 4 or 5, wherein the third straight portion (48) and the fourth straight portion (48) extend in parallel planes along the first axis.

7. The turbine seal of claim 4, 5 or 6, wherein the third straight portion (48) and the fourth straight portion (48) each terminate in a flat tip (68,70).

8. The turbine seal of claim 4, 5, or 6, wherein the third straight portion (48) and the fourth straight portion (48) each terminate in a rounded tip (68,70).

9. The turbine seal of claim 1, wherein the turbine seal (46) is configured to mount within a triangular recess (52) in the first bucket segment.

10. The turbine seal of claim 9, when dependent of any of claims 4 to 8, wherein the first straight portion and the second straight portion (49) are at least partially disposed in the recess in the first bucket segment and the third straight portion and the fourth straight portion are disposed in the gap.

11. The turbine seal of any preceding claim, wherein the turbine seal comprises material having a first coefficient of thermal expansion that is greater than a second coefficient of thermal expansion of the first and second bucket segments.

12. A system, comprising:
a first turbine segment (32) comprising a first blade (40) coupled to a first shank (36);
a second turbine segment (32) comprising a second blade (40) coupled to a second shank (36); and
the turbine seal (46) of any of claims 1 to 10, disposed in a gap (42) between the first and second shanks (36), wherein the turbine seal (46) is configured to maintain contact with the first and second turbine segments (32) as a width of the opening varies.

13. The system of claim 12, wherein the angle between the first and second straight portions (49) of the turbine seal varies to maintain contact between the turbine seal and the first and second turbine segments (32) as the width of the opening varies.

14. The system of claim 12 or 13, wherein the turbine seal extends along the gap (42) between the first and second shanks (36) in a radial direction relative to a rotational axis of the first and second turbine segments (32), and the turbine seal is at least partially disposed in the recess (61) in the first shank.
